# DEMANDE DE BREVET EUROPEEN

(11) **EP 1 895 331 A2**
(43) Date de publication de la demande: **05.03.2008**
(21) Numéro de dépôt: 07380243.1
(22) Date de dépôt: 30.08.2007
(51) Int. Cl.: G01W 1/14

(54) **Instrument pour l'étude de la neige, méthode de mesure du manteau neigeux, méthode de recharge des batteries et méthode pour transformer un corps flexible en corps rigide vertical**

(30) Priorité: 30.08.2006 ES 200602295
(71) Demandeur: Mur Güerri, Angel Ramiro, 22467 Villanova Huesca (ES)
(72) Inventeur: Mur Güerri, Angel Ramiro, 22467 Villanova Huesca (ES)

(57) **Abrégé**

La présente invention se réfère à un instrument qui peut être utilisé pour fétude de la neige et/ou pour produire de l'énergie. Grâce à l'utilisation de cet instrument on obtient des données caractéristiques pour observer l'évolution temporaire et spatiale du manteau neigeux. Son installation est sous la neige et il est distribué de façon individuelle ou en réseau pour obtenir des cartographies et ainsi analyser la neige sur une région déterminée. Il peut être utilisé pour obtenir des données par exemple, dans les zones d'avalanches (découvrir les conditions d'apparition d'une avalanche dans une zone déterminée....), les pistes de ski des centres hivernaux (conservation et aménagement des pistes de ski...), les régions montagneuses où naissent les rivières....(modelos de prévision sur la quantité d'eau qui sera disposée à l'été, celle crue annuelle d'eau dans les rivières en printemps, modèles environnementaux sur le changement climatique....). La présente invention se réfère aussi à une méthode pour obtenir des données du manteau neigeux, à une méthode pour recharger le système d'alimentation et une méthode pour transformer un corps flexible dans un corps rigide vertical.

## Description

### ANTÉCÉDENTS DE L'INVENTION

La neige est un matériel extrêmement complexe. Il souffre des transformations qui dépendent principalement des variations de température. Les mesures precises de température sont importants parce qu'ils permettent de connaître le comportement des gradients de température à la proximité de la surface, les variations de température dans les limites des couches et les irrégularités locales de la courbure.

En faisant une coupe dans le manteau neigeux il est possible d'observer la structure des couches, sa dureté, la forme des grains et la distribution des températures. La température de la surface diminue au dessous de la température de l'air dans un jour de ciel clair. La température du sol par contre oscille autour de 0°C en vertu de l'effet aislante. Selon l'épaisseur du manteau neigeux, le gradient de température est plus ou moins important. Ceci influence la diffusion de la vapeur d'eau et du flux thermique et par conséquent la transformation des cristaux de neige.

On peut faire une coupe dans la neige et obtenir une image en utilisant une chambre infrarouge. Mais l'analyse est seulement possible une seule fois et on a besoin d'envahir l'espace neigeux à étudier. Il est nécessaire de mesurer rapidement parce que les conditions atmosphériques modifient l'état initial de la coupe.

Aussi la température de la surface varie fortement en espace et temps. L'influence de la radiation, les courants d'air, la structure de la surface et l'hétérogénéité de la neige expliquent cette variation.

Une camera IR peut obtenir une image d'une surface neigeuse pour étudier les températures. Mais il permet seulement une analyse limitée de la surface et est sensible aux objets présents dans à la zone à étudier.

Une analyse complémentaire peut être obtenue en plaçant un réseau d'estations météorologiques sur la surface.

L'entreprise Option (St Martin de Heres (Isere-France)) a développé des estations météorgoliques appelées Nivosa consacrées à acquérir des données pour aider à analyser la neige. Ces estations mesurent seulement l'épaisseur de la neige en utilisant une technique ultra-sons et de certaines données atmosphériques extérieures. Son installation est extérieure et utilisent une transmission de données par l'intermédiaire de satellite.

Dans une analyse à distance ces estations ou la technique de camera IR seulement permettent d'obtenir des données extérieures du manteau neigeux. Pour obtenir une information precise de l'intérieur du manteau neigeux il est nécessaire de se déplacer à la zone et d'effectuer une coupe.

Puisque les deux techniques nécessitent d'une installation extérieure, non toutes les zones présentent des conditions favorables.

D'autre part, les instruments autonomes ont besoin d'un système d'alimentation capable de maintenir son autonomie de fonctionnement. Le système d'alimentation peut posséder un ou plusieurs accumulateurs. Si l'instrument a besoin de davantage d'énergie que les accumulateurs peuvent fournir il est nécessaire que ceux-ci puissent être rechargés. Pour charger un accumulateur on a besoin de l'énergie de voltage supérieur au voltage de l'accumulateur.

### DESCRIPTION DE L'INVENTION

Il serait par conséquent désirable d'obtenir un appareil capable d'obtenir en même temps des données significatives d'intérieur et de l'extérieurs du manteau neigeux qui permettent d'étudier la neige sans devoir se déplacer pour effectuer une coupe, en analysant toute l'épaisseur et la surface du manteau neigeux sans causer des destructions dans la neige, sans impact visuel, en fonctionnant de facon remote et indépendante des conditions extérieures et météorologiques, occupant à réduit space, avec une grande facilité et flexibilité par rapport à leur installation et desinstalación et avec la possibilité de produire de l'énergie pour être rechargé. Les données obtenues permettent d'effectuer une analyse spacio-temporelle du manteau neigeux. Les mesures des données dans un même lieu sont indépendantes des possibles mesures effectuées précédemment.

La présente invention comprend un instrument pour l'étude la neige et 3 méthodes comme on a défini dans l'ensemble de revendications jointes.

De cette facon, avec la présente invention on obtient du manteau neigeux la température intérieure et en surface, l'épaisseur, la vitesse et la direction du vent en surface, la réflexion IR de toutes les couches... en déplacant les capteurs rectilignement dès la base jusqu'à la surface extérieure de la neige. Il peut fonctionner en mode "mesure" ou en mode "charge". Une communication à distance (en utilisant un modem GSM, par l'intermédiaire d'un satellite...) active le mode souhaitée. En mode "mesure", les capteurs obtiennent des données et ceux-ci sont envoyés vers un centre de traitement. En mode "recharge" les pelles de l'anémomètre permettent de produire de l'énergie qui est utilisé pour charger les accumulateurs du système. En général le mode "recharge" peut être activée si les données proportionnées du mode "mesure" montrent qu'il existe un vent suffisant dans la surface. Il est aussi possible d'utiliser une cellule solaire en combinaison ou indépendamment des pelles de l'anémomètre pour produire de l'énergie en profitant de la lumière directe et/ou reflétée de la neige.

### BRÈVE DESCRIPTION DES DESSINS

Pour une meilleure compression de ce qu'il est décrit dans la présente mémoire, on accompagne des dessins dans lesquels, seulement à titre d'exemple, on représente un cas pratique de réalisation de l'instrument pour analyser la neige et la charge du système d'alimentation.

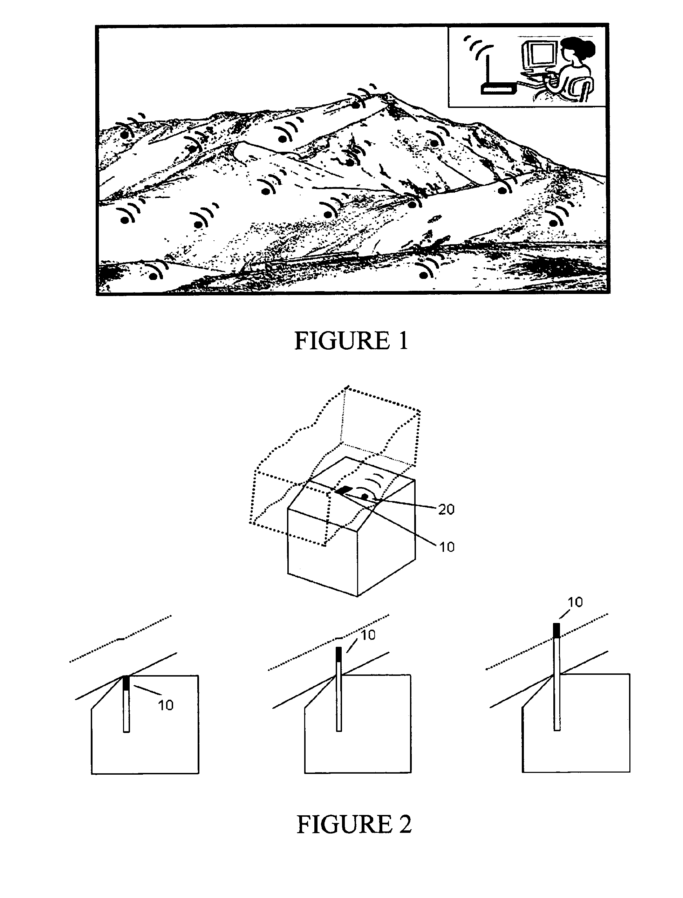

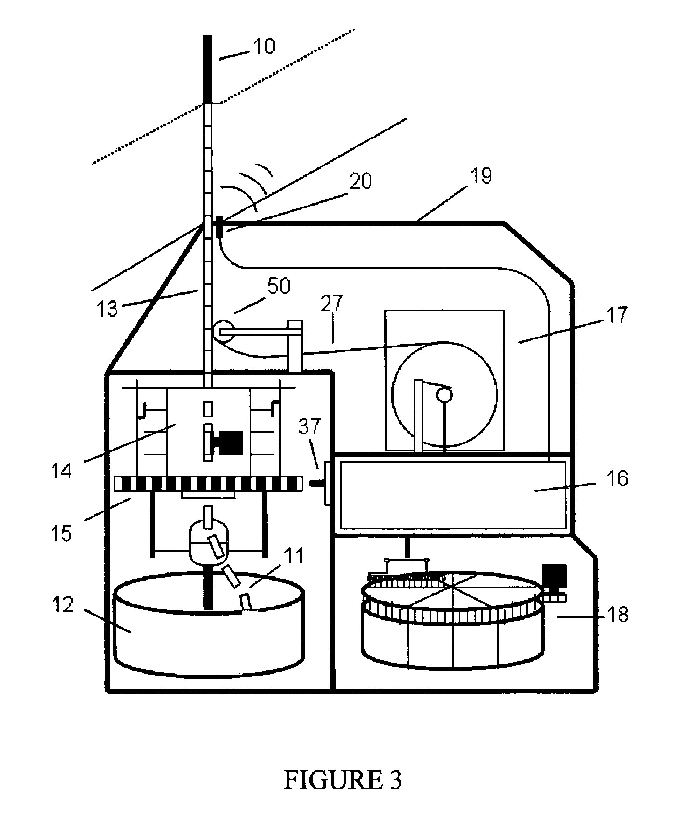

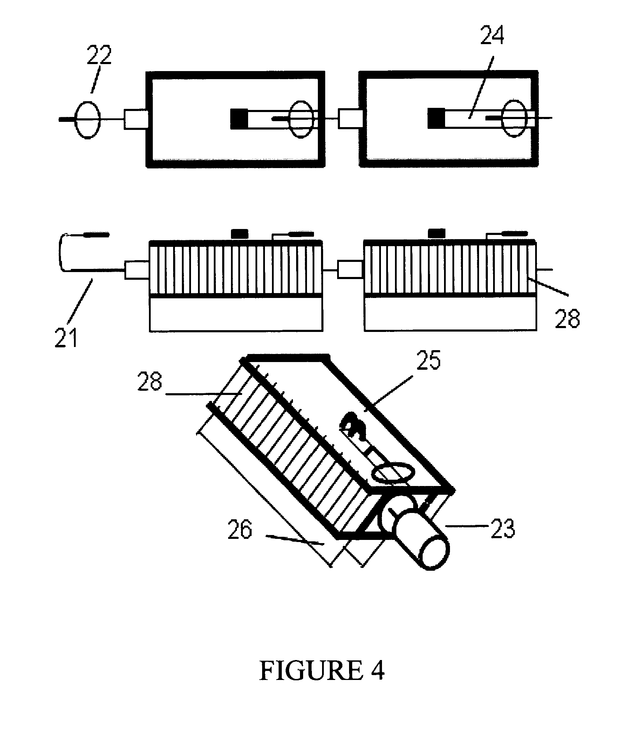

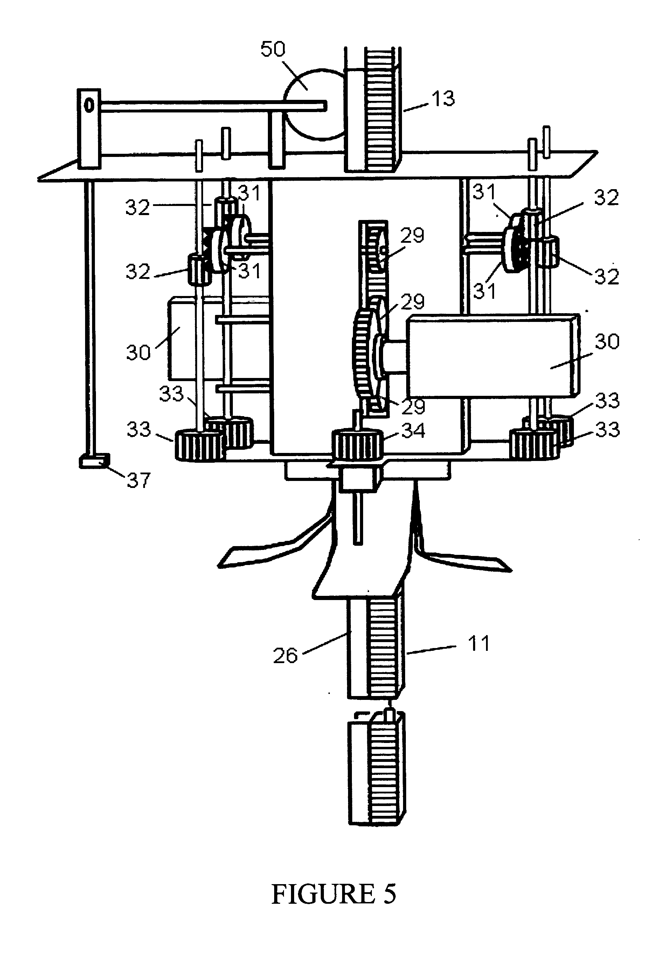

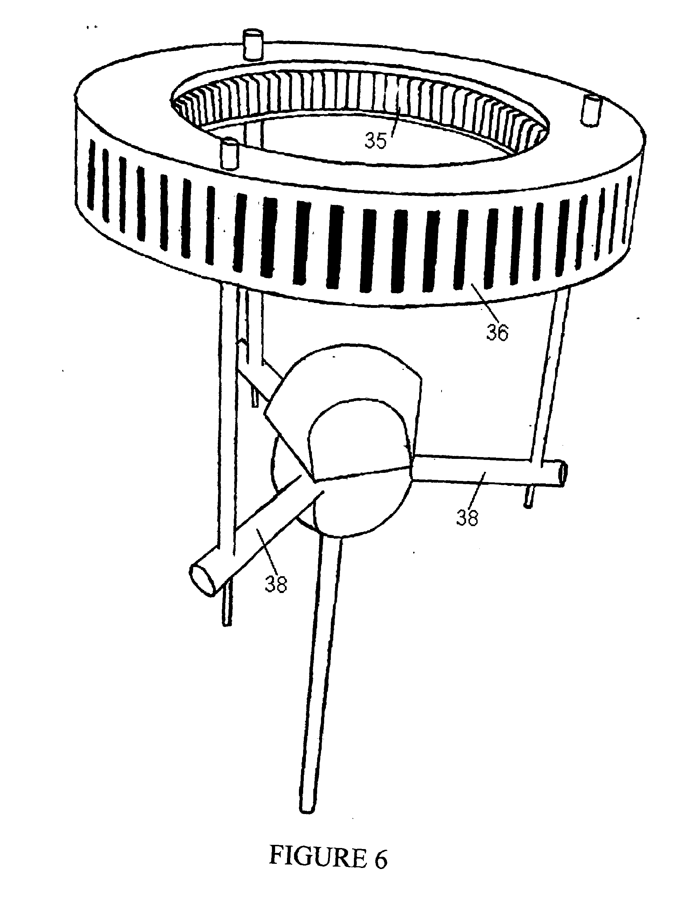

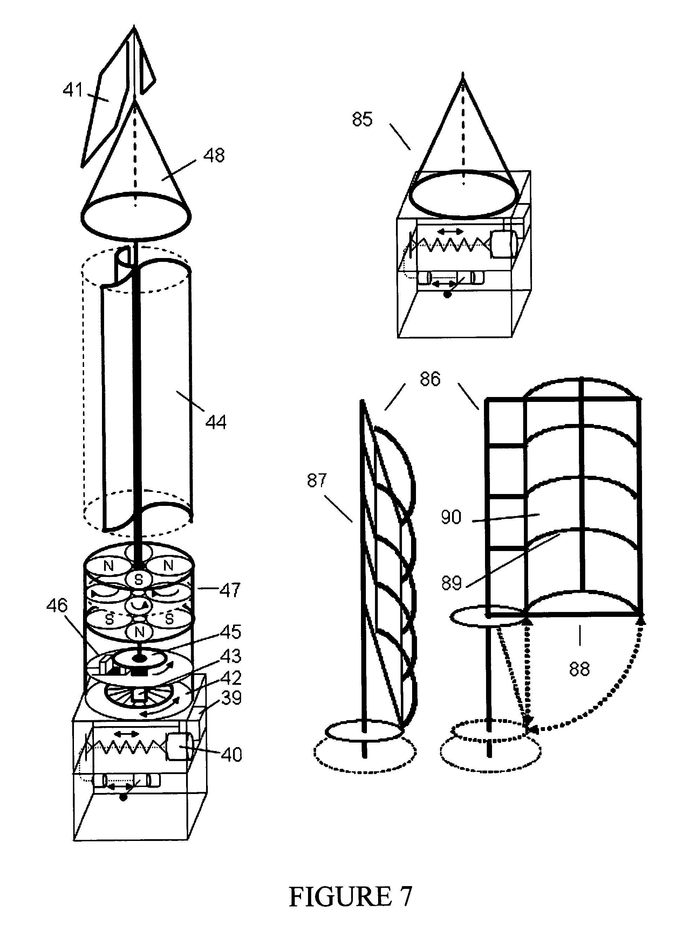

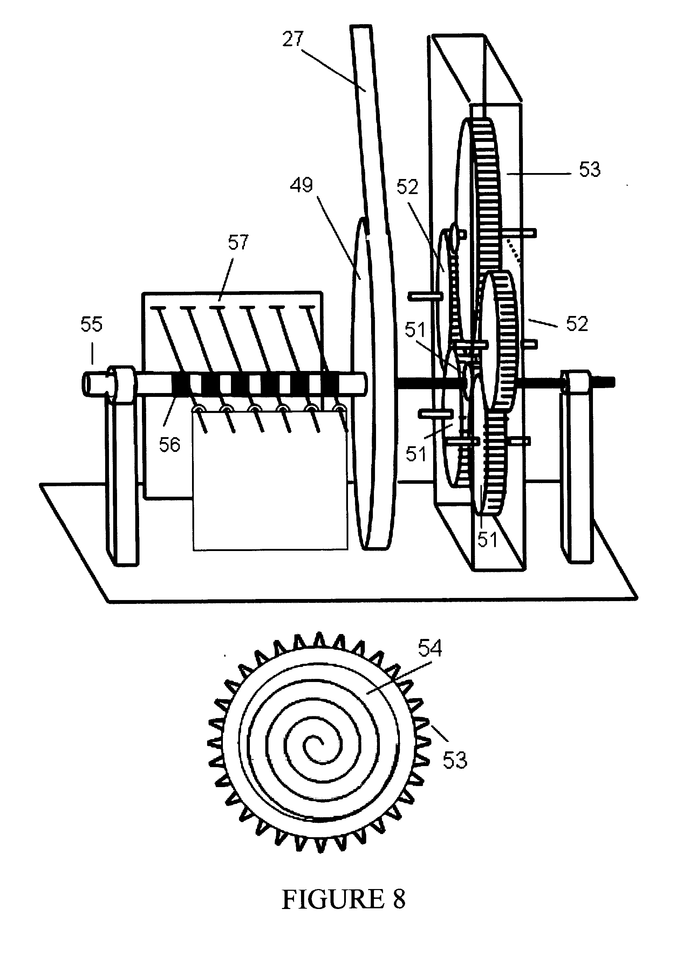

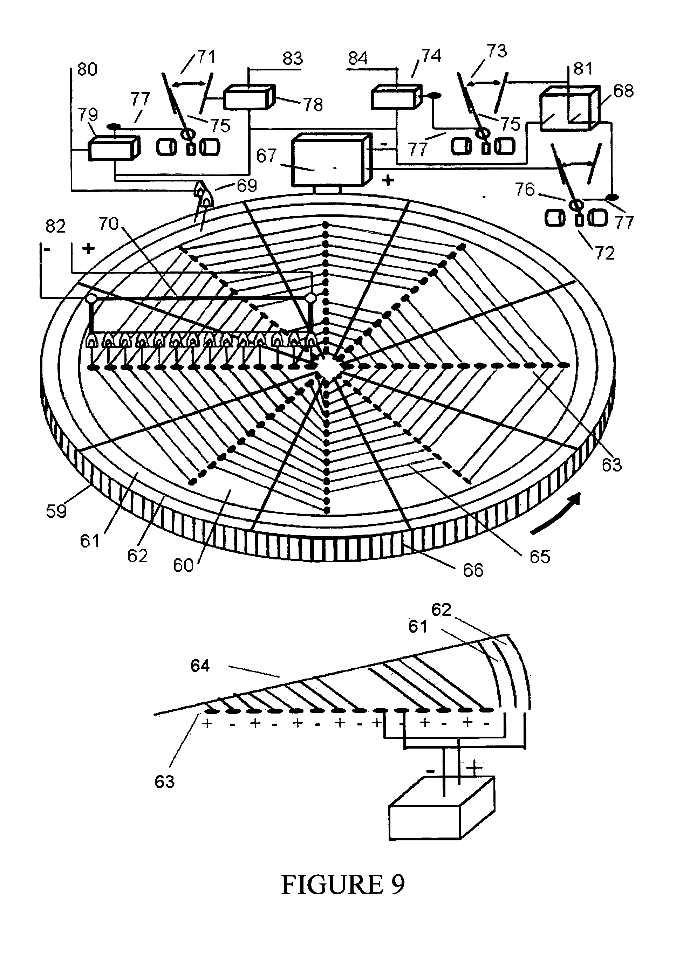

La figure 1 est une vue général du contexte de fonctionnement de l'invention sur une montagne couverte de neige ; la figure 2 est une vue en perspective de l'invention située sous le manteau neigeux et son fonctionnement ; la figure 3 est une vue montrant les sections internes de l'instrument pour l'étude de la neige ; la figure 4 montre la structure du corps flexible- rigide (11-13) ; la figure 5 est une vue en perspective du système (14) qui transforme le corps flexible rigide ou vice versa ainsi qu'un capteur IR de couleur (37) ; la figure 6 est l'utile utilisée pour enrouler et dérouler le corps flexible (15) ; la figure 7 montre les capteurs dans la tête du corps rigide (10) ; la figure 8 est l'élément retractable (17) qui permet d'unir les capteurs de tête avec le reste de l'instrument ; la figure 9 représente différentes parties du mécanisme utilisé dans le système d'alimentation pour recharger les accumulateurs (18).

### DESCRIPTION D'UNE RÉALISATION PRÉFÉRÉE

L'invention sera décrite par rapport à une réalisation préférée et on comprendra qu'on ne prétend pas limiter l'invention à une telle réalisation.

L'organisation et la manière d'opération de l'invention, avec les avantages de de cette dernière, peuvent être compris mieux avec les descriptions suivantes, en connexion avec les dessins que s'accompagnent, où les numéros de référence qui sont répétés dans plusieurs dessins identifient des éléments semblables.

En retournant maintenant aux dessins, la Fig.1 montre une vue général du contexte de fonctionnement de l'instrument de la présente invention. Divers instruments situés sous le manteau neigeux (par exemple dans une montagne) sont activés à distance depuis un centre de control (par exemple en utilisant modem GSM). Ceux-ci exécutent l'ordre et quand ils termineront envoient les données demandées au centre de control.

Dans la Fig.2 on montre un schéma de comment l'instrument déplace la tête du corps rigide (10) qui contient certains capteurs dès la base jusqu'à la surface du manteau neigeux après avoir été activé à distance. Ceci est possible parce que si on regarde la Fig.3, on observe que le corps (11) flexible enroulé dans un récipient de base giratoire (12) est transformé un corps rigide (13). Un système (14) compacte les unités du corps flexible et au même temps que le corps rigide avance autre corps tourne (15) dont l'intérieur a une roue dentée et qu'aide à dérouler le corps flexible dans le corps giratoire. Dans la Fig.3 on observe d'autres sections de l'instrument, un centre de contrôle et communications (16), un système de transmission retractable avec un resort en spirale (17) et un système d'alimentation et charge (18). Toutes les sections se trouvent dans un récipient compact (19). Celui-ci peut être enterré sous terre.

Dans un tel cas, la partie supérieure proche à l'extérieur est inclinée pour réduire au maximum le contact de l'instrument avec le manteau de neige. Le centre contrôle et communications possède une antenne (20) qui peut être située près de la sortie du corps rigide de l'instrument.

Dans la Fig.4 on peut voir la structure des unités du corps flexible (11). On observe aussi comme elles sont reliées. Les unités restent unies par un fil courbé (21). Quand les unités seront séparées le corps circulaire (22) à la fin du fil empêche que celles-ci perdent le contact en maintenant la flexibilité. Quand ils seront ensemble le recouvrement cylindrique (23) de l'autre extrémité du fil s'adapte et toutes les deux forment un corps rigide. À la fin de la cannelure (24) on trouve un autre fil (25) courbé qui aide à la fixation des unités. Les guides (26) permettront de canaliser le câble (27) entre la tête du corps (10) et le système retractable rigide (17). Les latéraux de chaque unité présentent un ensemble de fils (28) alignés avec cavité autour d'eux pour permettre la conexion d'une roue dentée.

La Fig.5 est une vue en perspective du système qui transforme le corps flexible (11) dans un corps rigide (13). Présente 6 roues découpées (29) dans 2 faces. Les 2 roues inférieures de chaque face sont reliées avec un moteur électrique (30). Quand ceux-ci fonctionnent les roues déntées are in rotation et déplacent dans l'intérieur les unités du corps flexible de telle sorte qu'entre les 4 relient les unités et poussent celles-ci vers le haut. Ils déconnectent aussi les unités quand le mouvement sera vers le bas. Les guides (26) aident à placer les unités du corps flexible (11) pour que les roues dentées saisissent celles-ci correctement. Les roues dentées supérieures (29) tournent selon le corps rigide avance. Chaque roue dentée supérieure tourne autour d'un axe qui possède de nouvelles roues dentées avec des dents dans les latéraux (31). Ceux-ci sont reliés avec 4 roues découpées (32) situées dans 4 axes verticaux. La connexion est alternative et permet que les roues découpées de dents plus grandes (33) situées dans la base des axes verticaux soient en rotation dans la même direction. Celles-ci en tournant et aidés par 2 autres roues (34) permettent de tourner le corps (15). Le corps (15) de la Fig.6 contient une roue dentée intérieure (35) et lignes verticales alternatives de couleur noire et blanche (36). Un capteur IR de couleur (37) dans la Fig.5 permettra de détecter les bandes quand le corps de la Fig.6 tourne. Et par conséquent on saura la distance que le corps rigide s'est déplacée en comptant les bandes. Quand le corps de la Fig.6 tourne, les tubes (38) de la roue dentée intérieure (35) tournet et aident à dérouler ou à enrouler le corps flexible dans un récipient de base giratoire (12) dépendant si le corps rigide (13) monte ou descend.

La Fig.7 représente la tête du corps rigide (10). Il est un corps dont la base a des dimensions semblables aux unités du corps rigide (13) mais beaucoup plus élargi. Dans la tête on trouve divers capteurs ainsi qu'un microcontrôleur. Bien que les capteurs peuvent directement communiquer avec le centre contrôle et communications (16) dans cette réalisation on a préféré communiquer les capteurs avec un microcontrôleur dans la tête. Ce microcontrôleur est en communication avec le microcontrôleur du centre contrôle et communications (16). La communication est série asynchrone.

Quand le corps rigide montera, la tête de capteurs (10) monte. Le capteur IR de couleur (39) détecte la présence de neige. Quand la tête atteindra l'extérieur, le capteur IR de couleur (39) ne détecte pas de la neige et le mouvement vertical vers le haut s'arrête. L'ensemble de capteurs de la tête peut analyser la surface du manteau neigeux.

Ainsi, avec le capteur de température (40) on calcule la température dans la surface. Ce capteur est en connexion avec un système de 2 bobines qui contrôlent un petit aimant. Le capteur et l'aimant unis utilisent un fil. Le fil passe par l'intérieur de d'un resort et d'un des bobines. Selon le sens du courant qui circule par les bobines l'aimant se déplace à droite ou au gauche. Ainsi le fil déplace le capteur de température (40) vers l'intérieur quand l'aimant se déplacera à droite. Quand il n'y aura pas courant dans les fuseaux l'aimant est libre et le resort pousse le capteur de température à l'extérieur. Une manière plus simple consiste à relier le capteur de température avec l'aimant sans fil et sans resort. Maintenant le capteur se déplace de l'intérieur à l'extérieur ou vice versa en investissant le sens des courants des bobines.

Le vent dans la surface déplace l'ailette (41). Celle-ci est alignée avec la direction du vent. L'ailette tourne en connexion avec un disque (42) où sont différenciés divers secteurs de plusieurs couleurs. Un capteur IR de couleur (43) détecte la couleur du secteur et par conséquent est possible déduire la direction du vent.

En même temps le vent dans la surface déplace les pelles (44). Celles-ci sont en connexion avec le disque (45). Un optoacoplador de capsule cannelée (46) détecte quand le disque passe par sa cannelure. De cette manière, en comptant le nombre de fois que le disque tourne en un certain temps, il est possible d'estimer la vitesse moyenne de vent.

Quand on a mesuré les données dans la surface, la tête du corps rigide (10) decent et s'arrêté pendant le parcours. Il mesure les températures avec le capteur de température (40) et la réflexion IR avec le capteur (39) pour prendre des données de l'intérieur du manteau neigeux. Le corps rigide diminue tant de bandes comme le capteur (37) a détecté dans le processus de montée. Le nombre de bandes permettent de calculer l'épaisseur du manteau de neige.

Si le système de contrôle est activé en mode "recharge", la tête du corps rigide (10) monte jusqu'à la surface. Dans ce cas, le microcontrôleur de la tête n'utilise pas les capteurs pour mesurer des données significatives. Les pelles de l'anémomètre (44) rotan par action du vent en connexion avec une dynamo moteur (47). Dans le dessin on montre une dynamo de 4 pôles. Les 4 bobines sont placés entre 2 groupes de 4 aimants dont l'orientation est alternative. Une possible réalisation est que la dynamo fonctionne en faisant tourner les aimants et laissant les bobines statiques. L'électricité produite est transmise vers le système d'alimentation pour charger les accumulateurs en utilisant le câble (27).

Le dynamo-moteur peut aussi fonctionner comme un moteur. Ceci est utile quand le système travaille en mode "mesure". Quand la tête du corps rigide monte, il n'existe pas presque de résistance si la neige est récent. Si la tête essaye de traverser une neige plus compacte, on donnerá énergie au dynamo- moteur pour obtenir une rotation qui aide à traverser le manteau neigeux. Cet effet est augmenté quand on utilise la pointe de la tête (48) sous forme de "foret" et l'ailette (41) se fonde avec la pointe de la tête sous l'effet de la pression. Un petit resort dans la base de l'axe qui unit l'ailette (41) avec le disque de couleurs (42) restitue à l'ailette à sa position correcte quand celle-ci atteint l'extérieur.

On a prévu la possibilité de profiter de la radiation solaire pour obtenir de l'énergie. Cette énergie pourrait être utilisée pour charger les accumulateurs et en outre il serait proportionnelle à la quantité de radiation solaire qui reçoit la neige. On utiliserait de petits panneaux solaires placés sur la tête (10).

La Fig.8 représente un système de transmission (17). Celui-ci relie la tête du corps rigide (10) avec le centre contrôle et communications (16) de l'instrument. La connexion est effectuée en utilisant un câble de 6 voies (27). 2 voies sont pour nourrir la tête de capteurs avec un microcontrôleur, 2 autres voies sont utilisées pour transmettre des données entre le microcontrôleur de la tête et le microcontrôleur du centre de contrôle et communications et les autres 2 voies sont utilisés pour la transmission de l'énergie produite dans la tête vers le système d'alimentation. Ce câble se trouvé enroulé dans un disque (49) avec des bords. Quand le corps rigide monte, le câble monte à l'aide des guides (26) et d'un disque (50) de libre rotation (Fig.5 et 3). Quand le câble monte, le disque avec des bords (49) tourne. L'axe de rotation de ce disque déplace une petite roue dentée qui à son tour déplace 2 roues découpées (51) de radio supérieure qui en même temps déplacent 2 autres roues dentées de même rayon (52) et celles-ci tournent une autre roue découpée de radio supérieure (53) dans l'intérieur duquelle on a un resort en spirale (54) qui est comprimée. Quand le corps rigide decent, le resort en spirale se descomprime, les roues dentées et le disque avec des bords (49) tournent en sens contraire. Le câble de 6 voies (27) est enroulé dans le disque avec des bords (49).

Le disque avec des bords (49) possède un axe plus grand (55) de matériel non conducteur dans l'intérieur duquel les 6 voies sont séparées et reliés avec 6 surfaces conductrices (56). 6 câbles (57) qui proviennent du système de contrôle (16) et du système d'alimentation (18) sont en contact avec les 6 surfaces conductrices par simple gravité et permettent la rotation de l'axe plus grand (55). Avec ce système de transmission le centre de contrôle (16) et le système d'alimentation (18) de l'instrument peuvent communiquer avec la tête du corps rigide.

On a prévu la possibilité d'envoyer des données depuis la tête du corps rigide (10) jusqu'au centre contrôle et communications (16) de l'instrument sans câble. Par exemple en utilisant une transmission radiofréquence qui a besoin très de peu d'énergie pour fonctionner (Bluetooth, ZigBee...). Et même s'on ne requiert pas une génération d'énergie dans la tête (10), celle-ci il pourra fonctionner avec une petite batterie située dans sa base sans avoir besoin d'un câble d'alimentation et de cette manière le câble (27) et le système (17) ne seraient pas nécessaires.

La Fig.9 montre le système d'alimentation et certains composants utilisés pour charger les accumulateurs. Le système d'alimentation est formés par N accumulateurs distribués dans des secteurs dans un volume cylindrique (59). Dans la Fig.9 on observe 8 secteurs. Sous chacun on dissimule un accumulateur de 1.2 Volt. On utilise N-1 accumulateurs pour nourrir l'instrument et l'accumulateur libre est disponible pour être chargé. Dans la surface de chaque secteur on voit une surface (60) non conductrice et deux conducteurs de manière circulaire (61, 62). La surface non conductrice de chaque secteur présente une ligne de plusieurs connecteurs (63) de nombre égal à 2 x (N -1). Les connecteurs se correspondent avec le pôle positif et négatif de N- 1 accumulateurs. En utilisant une connexion en série par le système de connexion (70) ces accumulateurs nourrissent l'instrument. Le système de connexion (70) relie le pôle positif d'un accumulateur avec le négatif d'un autre accumulateur pour obtenir une connexion en série. Ce système de connexion (70) présente 14 fils conducteurs où l'extrémité inférieure de chaque fil est libre et en contact par gravité avec la ligne de connecteurs (63). Un accumulateur d'un secteur voisin ne prend pas part du secteur où agit le système de connexion en série (70). Cet accumulateur est libre pour être chargé. L'accumulateur de chaque secteur est relié à 2 points de connexion de la surface non conductrice et aux surfaces conductrices de forme circulaire (64). En reliant les connecteurs de tous les secteurs utilisant câblé sous forme de toile d'araignée (65) on obtient que le système de connexion en série (70) peut être utilisé de la même manière par tous les secteurs laissant toujours un accumulateur libre pour être chargé.

Ainsi, le système de charge a dans chaque secteur une ligne de connexion (63) de 7 accumulateurs que mis en série fournissent 8.4 volts comme source d'alimentation en utilisant des accumulateurs de 1.2 volt de voltage nominal. L'accumulateur libre pour être chargé (1.2 volt de voltage nominal) se trouve dans un secteur voisin du secteur où agit le système de connexion en série (70). Dans ce secteur agit un autre système de connexion (69) qui relie cet accumulateur libre avec l'énergie qui peut être produite dans l'extérieur. Deux fils conducteurs de cette connexion peuvent glisser sur les surfaces extérieures conductrices (61, 62).

Le corps cylindrique a autour de lui une chaîne (66) qui est reliée à une roue dentée d'un petit moteur (67). Celui-ci peut être nourri avec l'accumulateur (68).

Quand l'instrument est en mode "charge" avec la tête du corps rigide dans la surface, le centre de contrôle de l'instrument estime la quantité de charge de l'accumulateur libre pour être chargé en mesurant son voltage. Quand celui-ci a un voltage autour de 1.35 on considère que l'accumulateur est chargé un 95%. Ce seuil peut changer. Il estime aussi la charge moyenne des autres accumulateurs à partir de la valeur du voltage d'alimentation. Si le système de contrôle considère que l'accumulateur libre peut être chargé, il relie l'entrée du système (71) pour que le courant produit dans l'extérieur arrive au contrôleur de charge (79) et de celui-ci à l'accumulateur choisi. Le centre de contrôle coupe la connexion (71) chaque certain temps pour contrôler le processus de charge. L'accumulateur qui est chargé ne doit pas posséder plus de 10% plus de charge que la charge moyenne des autres accumulateurs. De cette manière, si l'accumulateur est chargé dans sa totalité ou au maximum 10% plus que la moyenne de des autres accumulateurs, le système de contrôle (16) paralyse la charge de cet accumulateur avec (71) et relie l'accumulateur (68) au moteur (67) en utilisant la connexion (72). Le moteur déplace une roue dentée reliée à la chaîne (66) autour du corps cylindrique. Celui-ci tourne. Le système de connexion (70) perd la connexion en série avec les accumulateurs et le système de contrôle (16) reste sans alimentation. Comme l'alimentation du moteur (67) est indépendante de l'alimentation du centre de contrôle le corps cylindrique (59) continue tournant jusqu'à le système de connexion (70) trouve dans le prochain secteur une nouvelle connexion en série. Et le système de contrôle (16) de nouveau en fonctionnement paralyse la rotation par un changement dans la connexion (72). Le système de contrôle (16) répète la même procédure de charge décrite précédemment mais cette fois avec un nouvel accumulateur libre en utilisant le système de connexion (69). L'accumulateur (68) qui nourrit le moteur (67) peut être chargé de manière indépendante à partir de l'énergie des accumulateurs en série. Ainsi cet accumulateur possède sa propre connexion de contrôle (73) et son propre contrôleur de charge (74).

Les connexions avec aimant (71, 72, 73) fonctionnent avec 2 bobines qui déplacent un petit aimant situé entre elles. Selon le sens du courant, celles-ci créent un champ magnétique qui déplace l'aimant à droite ou à gauche. L'aimant est relié à un petit bâtonnet (75). Ce petit bâtonnet possède un axe petit et un axe plus grand. L'aimant est dans l'axe plus petit. Le petit bâtonnet peut touner relié à un petit cylindre (76) quand l'aimant se déplace. Quand l'aimant se déplace, l'axe plus grand du petit bâtonnet change la connexion et la maintient par gravité. Un fil (77) qui glissé sur le petit cylindre (76) quand tourne facilite la connexion.

Si l'instrument fonctionne en mode "recharge" l'énergie peut provenir du dynamo- moteur (45) en mouvement. Comme le courant est alternatif, celle-ci doit être transformée en continue à l'aide d'un redresseur (78). Entre ce redresseur et le système de connexion (69) existe un contrôleur de charge (79).

Le microcontrôleur du système de contrôle (16) estime l'état de charge de l'accumulateur libre en mesurant son voltage (80). La charge de l'accumulateur (68) est estimée au moyen (81). Le potentiel V1 qui fournit le système d'alimentation (82) sert à estimer la charge moyenne des accumulateurs en série.

Le câble (83) fournit de l'énergie depuis un générateur d'énergie et le câble (84) est relié au système d'alimentation de voltage V1.

Cette procedure de charge permet de charger un système d'alimentation de voltage V1 utilisant énergie de voltage V2 < V1. Avec la condition d'avoir le voltage V1 comme une connection en serie d'accumulateurs de voltaje V3 < V2.

Le voltage de 8.4 volts est transformé au voltage standard de 5 volts caractéristique pour le fonctionnement les capteurs, de microcontrôleurs et de moteurs (30).

On a prévu la possibilité d'utiliser l'énergie solaire pour produire de l'énergie. Dans ce cas, de petites plaques solaires s'adaptent à la tête (10) du corps rigide. L'énergie proportionnée serait aussi proportionnelle à la quantité de radiation qui reçoit la surface neigeuse.

La tête de capteurs (10) peut être fabriquée et installée avec différents degrés de complexité selon les données à mesurer et le temps d'utilisation. Ainsi la tête la plus simple obtiendrait des données pour mesurer la température (intérieur et extérieur) et l'épaisseur du manteau neigeux et la plus complexe obtiendrait aussi des données pour mesurer la vitesse du vent en surface, la direction du vent en surface, radiation solaire....A1 même temps la tête peut produire de l'énergie ou la force du vent ou à travers l'énergie solaire pour recharger le système d'alimentation. La Fig.7 montre aussi une simple tête de capteurs (85).

Les pelles de la tête de capteurs (44) peuvent être conçues de différentes manières. Les pelles (44) se correspondent avec une conception statique. La Fig.7 montre une pelle dynamique (86) en position repos et récueilli (87) en s'adaptant à la dimension de la tête de capteurs. Par un déplacement vertical il se dévoilé. La pelle dévoilée (88) possède des dimensions supérieures à la section de la tête. La pelle est vertébré par des segments (89) qui possèdent une lame flexible entre eux (90). Les segments (89) peuvent tourner vers le bas ou ver le haut pour permettre le recueillement ou le déploiement respectivement de la pelle. Quand les pelles rotan par action du vent les segments sont statiques.

En cas où la génération d'énergie n'est pas significative, le système d'alimentation doit posséder charge pour fournir l'énergie suffisante pendant la période d'étude du manteau neigeux. On a considéré l'idée de charger les accumulateurs depuis l'extérieur en utilisant un câble depuis le système d'alimentation jusqu'à un point extérieur de la zone d'étude hors du manteau neigeux où plusieurs options sont possibles. Un aérogénérateur, une plaque solaire ou utiliser un chargeur. Dans ce dernier cas il pourrait être nécessaire de se déplacer jusqu'à ce point extérieur. Ces méthodes fourniraient l'énergie nécessaire pour recharger le système d'alimentation s'il est nécessaire.

Le système de contrôle et communications (16) est un circuit électronique où tout est sous le contrôle d'un microcontrôleur. Celui-ci est relié avec un modem GSM par une communication en série asynchrone en utilisant des commandos AT. Le modem est le responsable de la réception à distance de l'action requise par le centre de traitement des données et de l'envoi des données obtenues.

Le microcontrôleur du centre de contrôle (16) contrôle aussi l'état de charge des accumulateurs (80, 81, 82) et choisit les connexions de contrôle nécessaires pour effectuer le processus de charge.

Le microcontrôleur du centre de contrôle (16) est aussi en communication avec un autre microcontrôleur situé dans la tête du corps rigide (10) par autre communication en série asynchrone par câble ou par une communication radiofréquence de basse puissance. Celui-ci lui envoie les données obtenues par les capteurs. Les deux microcontrôleurs contrôlent le mouvement vertical du corps rigide.

Un capteur de son associé au microcontrôleur du centre de contrôle (16) détectera le mouvement de la neige en utilisant l'instrument dans des zones d'avalanche.

## Revendications

1. Instrument pour l'étude de la neige, qui comprend:
un corps flexible formé par plusieurs unités (11),
un système (14) qui transforme le corps flexible à rigide (13) ou vice versa et déroule ou enroule celui-ci dans un corps giratoire (12) aidé par un corps qui possède une roue dentée intérieure et des lignes verticales dans l'extérieur (15),
un capteur IR de couleur compteur de lignes (37),
un circuit electronique de control et communications (16),
plusieurs capteurs (température, IR couleur, anémomètre, ailette....) avec principalement une dynamo- moteur et un microcontrôleur situés dans la tête du corps rigide (10),
un système d'alimentation avec système de charge (18),
un corps retractable qui relie la tête du corps rigide avec le reste de l'instrument (17).
Caractérisé parce que, le corps flexible (11) se trouvé enroulé dans un corps giratoire (12) et en rapport avec le système (14), le capteur IR de couleur (37) permet de détecter les bandes du corps (15) quand celui-ci sera en rotation, le corps retractable (17) possède des roues découpées (50, 51, 52, 53) qui compriment un resort en spirale (54) quand le câble (27) se déroulera du disque (49) et enroule le câble (27) quand le quai en spirale (54) se descomprime, le corps retractable (17) possède des surfaces conductrices (56) qui relient le câble (27) avec le centre de contrôle (16) et le système d'alimentation (18) quand le disque (49) tourne.

2. Instrument pour l'étude de la neige selon revendication 1 où la tête du corps rigide (10) mesure des données caractéristiques du manteau neigeux selon la méthode d'obtention de données du manteau neigeux des revendications 4, 5, le système de charge de l'alimentation (18) recharge l'alimentation selon la méthode de charge des revendications 6, 7, le système (14) transforme le corps flexible (11) dans un corps rigide vertical (13) selon la méthode pour transformer un corps flexible dans un corps rigide vertical des revendications 8.

3. Instrument pour l'étude de la neige selon revendication 1 où le système contrôle et communications (16) possède un microcontrôleur qui contrôle: les communications entre un modem GSM ou autre système de communication avec un centre de traitement des données, les methodes selon revendication 2.

4. Méthode d'obtention de données du manteau neigeux **caractérisé par**ce qu'il comprend les étapes suivantes :
- Activation du processus de mesure.
- Déplacement vertical depuis la base jusqu'à la surface du manteau neigeux d'un ensemble de capteurs (10).
- Analyser l'état dans la surface du manteau neigeux.
- Déplacement vertical depuis la surface de du manteau neigeux jusqu'à la position initiale.
- Les données de l'intérieur du manteau neigeux sont obtenues pendant le déplacement vers le haut ou vers le bas.
- Envoi des données obtenues en utilisant un moyen de communication à distance.

5. Procédure de mesure selon revendication 4 où la position initiale et finale de l'ensemble de capteurs qui effectuent les mesures est située sous le manteau neigeux, l'activation du processus de mesure peut être par une communication à distance (exemple modem GSM), manuelle ou automatique, les capteurs qui se déplacent permettent de calculer la température, vitesse du vent, direction du vent, radiation... dans la surface du manteau neigeux, la vitesse du vent est estimée à partir du nombre de rotations d'un cil (45) qui passe à travers un optoacoplador rasurado (46) suite à la force du vent exercée sur des pelles de conception statique (44) ou dynamique (86), la direction du vent est estimée au moyen d'un capteur IR de couleur (43) qui détecte la couleur de la section d'un disque de couleurs (42) situé perpendiculairement à son direction d'action qui tourne en connexion avec une ailette (41), les capteurs qui se déplacent calculent la température et la réflexion IR de l'intérieur du manteau neigeux, les capteurs dans la tête (10) transmettent les données à un microcontrôleur situé dans la tête (10) et celui-ci envoie les données à un autre microcontrôleur du système de contrôle (16) en utilisant une connexion par câble ou sans câble (technologie Bluetooth, ZigBee...), le microcontrôleur du système de contrôle (16) transmet les mesures vers un modem GSM ou autre système de communication capable d'envoyer les données vers un centre de traitement des données, l'épaisseur du manteau neigeux est calculée à partir d'un capteur IR de couleur (39) qui détecte la présence de neige et d'un autre capteur IR de couleur (37) qui détecte les bandes noires et blanches du corps (15). Le nombre de bandes est linéairement mis en rapport avec l'épaisseur du manteau neigeux puisque les bandes sont dans l'extérieur d'une roue dentée (36) qui tourne avec le déplacement rectiligne du capteur (39).

6. Méthode de charge de N accumulateurs d'un système d'alimentation de voltage V1 en utilisant de l'énergie de voltage V2 inférieur à V1 **caractérisé par**ce que le voltage V1 est la conséquence d'une connexion en série des N accumulateurs où chaque accumulateur possède un voltage nominal V3 inférieur à V2, les N accumulateurs sont distribués en N des secteurs circulaires d'un corps cylindre, N- 1 des accumulateurs nourrissent un système de contrôle en utilisant un système de connexion en série, un accumulateur est libre pour être chargé, chaque secteur possède une ligne de 2 x (N- 1) connecteurs (63) et 2 surfaces concentriques conductrices (61.62), la connexion en série de N- 1 accumulateurs est obtenue en utilisant un système de connexion en série (70) qui s'adapte à chaque secteur, les connecteurs des lignes de chaque secteur (63) sont reliés sous forme de toile d'araignée (65) et qui comprend les étapes suivantes :
- Activation manuelle, automatique ou à distance du processus de charge.
- Un générateur d'énergie (un aérogénérateur de conception statique (44) ou dynamique (86), une plaque solaire ou tout générateur d'énergie alternative...), fournit l'énergie de voltage V2.
- L'énergie est transmise à un redresseur si la génération est de courant alternatif.
- Le système de contrôle vérifie l'état de charge de l'accumulateur libre et l'état de charge moyenne des autres accumulateurs.
- Si l'accumulateur libre a besoin d'être chargé, le système de contrôle (16) permet que l'énergie rectifiée arrive au contrôleur de charge pour qu'il charge à l'accumulateur libre en utilisant le système de connexion (69).
- - Le système de contrôle (16) arrête le processus de charge chaque certain temps pour estimer l'état de charge de l'accumulateur libre et la moyenne de charge des autres et ainsi active et désactive ce processus de charge jusqu'à l'accumulateur ait été chargé au maximum 10% davantage sur la quantité de charge moyenne que possèdent les autres accumulateurs. Ainsi la différence de charge entre les accumulateurs n'est pas supérieure au 10 %. Ce pourcentage est orientatif et peut être différente.
- Ensuite le système de contrôle active la connexion entre un moteur (67) et un accumulateur indépendant (72).
- Le moteur (67) tourne le corps cylindrique (59) qui contient les accumulateurs.
- Le système de contrôle (16) est déconnecté quand le système de connexion en série (70) des accumulateurs change de secteur au tourner le corps cylindrique.
- Quand le système de connexion en série (70) sera relié avec une autre ligne de connexions (63) dans un autre secteur le système de contrôle (16) est activé de nouveau et coupe l'alimentation du moteur (67). Maintenant le système de contrôle (16) fonctionne avec autres n- 1 accumulateurs et un autre accumulateur est libre pour être chargé en répétant le processus décrit précédemment.
- Le système de contrôle décide la fin du processus de charge quand tous les accumulateurs ont été chargés, quand il n'existe pas une génération d'énergie suffisante
ou quand il existe un temps defini dans le processus de charge.

7. Procédure de charge d'accumulateurs selon revendication 6 où le système de contrôle est constitué principalement par un microcontrôleur qu'estime l'état de charge à partir du voltage de l'accumulateur libre (80), du voltage des accumulateurs en série (82) et du voltage de l'accumulateur (81) qui nourrit le moteur (67) et contrôle aussi le pas d'énergie vers l'accumulateur libre, vers le moteur (67) et vers l'accumulateur (68) du moteur (67).

8. Méthode de transformation d'un corps flexible (11) dans un corps rigide vertical (13) **caractérisé par**ce que le corps giratoire (12) contient le corps flexible enroulé, le système de transformation (14) compacte les unités, déplace verticalement le corps rigide (13) et enroule ou déroule le corps flexible dans le corps giratoire (12), de base giratoire libre, aidé par le corps (15), le corps flexible comprend plusieurs unités dont les parties (21.22) garantissent la flexibilité, les parties (23.25) garantissent la rigidité du corps rigide et les guides (26), les fils (28) et les cannelles (24) permettent le processus d'accouplement et désaccouplement dans le système (14). La méthode de transformation comprend les étapes suivantes :
- Les moteurs (30) tournent leur roue dentée qui tourne les roues dentées inférieures (29).
- Les roues dentées inférieures reliées aux fils (28) des unités rassemblent et poussent les unités du corps flexible en obtenant un corps rigide en se déplaçant verticalement vers le haut.
- Le corps rigide dans son déplacement tourne les roues dentées supérieures (29) qui à son tour tournent successivement les roues dentées (31, 32, 33). Les roues dentées (32) reliées aux roues dentées (31) sont placées de façon alternative dans différentes hauteurs pour obtenir que les roues dentées (33) tournent dans la même direction.
- Les roues dentées (33) rotan la roue dentée (35) du corps 15 où les tubes (38) aident à dérouler le corps flexible quand celui-ci avance vers l'intérieur du système (14).
- Quand les moteurs (30) tournent en sens contraire, le corps rigide (13) tourne les roues dentées supérieures (29) en sens contraire et se transformé un corps flexible (11) à l'aide des roues dentées inférieures (29) et celui-ci est enroulé dans le corps giratoire (12) aidé par la rotation en sens contraire des tubes (38) et les roues dentées (35, 33, 32, 31) qui tournent selon la rotation des roues dentées supérieures (29).
